# EUROPEAN PATENT SPECIFICATION

(11) **EP 1 368 951 B1**
(45) Date of publication and mention of the grant of the patent: **17.06.2009**
(21) Application number: 02703728.2
(22) Date of filing: 04.03.2002
(51) Int. Cl.: H04L 29/06, H04L 9/32

(54) **A SYSTEM FOR ENCRYPTION OF WIRELESS TRANSMISSIONS FROM PERSONAL PALM COMPUTERS TO WORLD WIDE WEB TERMINALS**
VERFAHREN ZUR VERSCHLÜSSELUNG DRAHTLOSER ÜBERTRAGUNGEN VON PERSÖNLICHEN PALMRECHNERN AUF WORLDWIDEWEB-ENDGERÄTEN
SYSTEME PERMETTANT LE CODAGE DE TRANSMISSIONS HERTZIENNES D'ORDINATEURS PERSONNELS DE POCHE A DES TERMINAUX WEB

(30) Priority: 15.03.2001 US 810031
(43) Date of publication of application: 10.12.2003
(73) Proprietor: International Business Machines Corporation, Armonk, NY 10504 (US)
(72) Inventor: MULLEN, Shawn, Patrick, Buda, TX 78610 (US); VENKATARAMAN, Guha Prasad, Austin, TX 78759 (US)
(74) Representative: Waldner, Philip
(86) International application number: PCT/GB2002/000931
(87) International publication number: WO 2002/076059

(56) References cited:
- WO-A-00/69114
- WO-A-01/78491
- DE-C- 19 923 174
- US-A- 5 812 671
- US-A- 6 081 601
- VAN THANH D: "Security issues in mobile eCommerce" ELECTRONIC COMMERCE AND WEB TECHNOLOGIES. FIRST INTERNATIONAL CONFERENCE, EC-WEB 2000. PROCEEDINGS (LECTURE NOTES IN COMPUTER SCIENCE VOL.1875), ELECTRONIC COMMERCE AND WEB TECHNOLOGIES. FIRST INTERNATIONAL CONFERENCE, EC-WEB 2000, 4 - 6 October 2000, pages 467-476, XP010515528 2000, Berlin, Germany, Springer-Verlag, Germany ISBN: 3-540-67981-2

## Description

### Technical Field

The present invention relates to the protection of data transmitted from wireless terminals, particularly palm type computer devices, to network computer terminals such as World Wide Web (Web) or Internet (used interchangeably) terminals.

### Background of Related Art

The past decade has been marked by a technological revolution driven by the convergence of the data processing industry with the consumer electronics industry. The effect has, in turn, driven technologies which have been known and available but relatively quiescent over the years. A major one of these technologies is the Internet or Web related distribution of documents, media and programs. The convergence of the electronic entertainment and consumer industries with data processing exponentially accelerated the demand for wide ranging communication distribution channels, and the Web or Internet commenced a period of phenomenal expansion. With this expansion, businesses and consumers have direct access to all matter of documents, media and computer programs.

In order for the Web to reach its full potential as the basic channel for all world wide business and academic transactions and communications, the providers and users of the Web and like networks must be assured an open communication environment, as well as protection of the data that is offered over the Web and the requests made for such data. With the rise of the Web, there has been an unfortunate increase in the number of malicious users who, at the least, try to disrupt Web and other network services and, at their worst, try to steal goods, services and data accessible over the Web. Of course, the industry has been working for many years to eliminate, or at least neutralize, the efforts of such malicious users.

Despite these security problems, the above factors have given rise to a new way of doing business, electronic business or E-business. This of course involves conducting all matter of business over the Web public network and/or private networks when greater security is demanded.

One of the cornerstones of world Web wide security has been encryption of the data transmitted. Unfortunately, it appears to be a truth on the Web that anyone who wants to get information badly enough can somehow get to it. However, users and Web developers may still use encryption as the final defense, i.e. even if intruders do get to the information, they still have much work to do before they can read or use the information. Web transactions are primarily encrypted using Public Key Cryptology, a system in which pairs of very large numbers are used to encode and decode transmitted data. One number of the pair is called the public key and is published, while the second number, the private key, is kept secret. Thus, when data is encoded using the public key, then the holder of the private key can decode or decrypt it. Conversely, the holder of the private key can prove its identity by encoding a message using that key. Then anyone who receives that message may decrypt the message by using the public key; since such a decryption which produces a coherent message proves that the sender is the holder of the private key. The strength of a public key system is measured by the size of the numbers used as keys. The two currently used Web sizes are 40 to 64 bits for lighter encryption and 128 bits for heavier encryption. Each added bit approximately doubles the difficulty of breaking the code. Thus, 128 bit encryption is about a trillion trillion times more difficult to break than 40 bit encryption. However, the larger bit number encryption systems demand greater CPU and storage capacity. In the general Web browsing technology, because of the availability of computers with greatly increased CPU processing power and increased storage capacity, the technology has moved toward high end encryption. Both major Web browsers: Microsoft's Internet Explorer and Netscape's Navigator now use the high end 128 bit encryption for Web transmissions. The standard encryption protocol for Web Documents is the Secure Sockets Layer (SSL). SSL encrypts the whole Web document, uses Digital Certificates issued by a certifying authority that has been approved under SSL protocols to authenticate that respective Web servers are what they claim to be and then the Web server and the Web station browser send encrypted messages back and forth until the particular transaction is complete. Encryption in the Internet or Web is discussed in greater detail in the text: Internet: The Complete Reference, Millennium Edition, Young et al., Osborne/McGraw-Hill, Berkeley, 1999, particularly pp. 403-406.

With the development of the Web has come a public demand for efficient access to the Web through palm-type terminals and, particularly, mobile and wireless palm type display terminals. These terminals, also known as PDA's (Personal Digital Assistants), include for example, Motorola's Two-Way Pager/PDA, the 3Com PalmPilot^{(™)} and the International Business Machines Corporation (IBM) WorkPad^{(™)}. Current estimates are that there are more than 15,000,000 of these devices presently in use. In recent years, personal palm devices have also developed a networking protocol: TCP/IP, which permits direct connection to the Web through PDA, i.e. palm-type terminal modems, which are described in greater detail at pp. 148-149 of the text Palm III & PalmPilot, Jeff Carlson, Peachpit Press, 1998.

While SSL protocols quite adequately serve the encryption needs of Web stations and Web sites wired to their respective Web servers, encryption problems have arisen in the use of wireless personal palm type devices to access the Web. The problems arise out of two-fold inadequacies. Firstly, any wireless communication is much more easily intercepted than a wired transmission would be. Secondly, and perhaps even more significantly, most palm type computers have far less processing power than even routine desktop computers. Thus, they do not have the speed or capacity to process the high powered SSL encryption which involves the encryption of whole documents. In addition, most high powered encryption programs require memory and data storage capacities well beyond the limited Random Access Memory (RAM) and Programmable Read Only Memory (ROM) of most palm type wireless computers.

US Patent Publication 6081601 describes a system for sending messages between wireless connected terminals. A first encryption method is used in sending the message from a transmitting terminal (e.g. a mobile device) to a mediator. A second encryption device is used in sending the message from the mediator to the receiving terminal.

### Summary of the Present Invention

According to one aspect of the present invention there is provided a system according to a computer network system for use in a computer network comprising a plurality of computer controlled terminals, said system for the secure transmission of data to the network from wireless remote computer controlled display terminals comprising:a wireless computer controlled display terminal including: means for determining security data in a document; means for encrypting part of the document containing the security data; and means for wirelessly transmitting said partially encrypted document; and a server computer including: means for receiving said partially encrypted document; means for further encrypting said received document; and means for transmitting said further encrypted document to a terminal in said network.

According to a second aspect of the present invention there is provided a system according to a method for the secure transmission of data from wireless remote computer controlled display terminals to a computer network of a plurality of computer controlled terminals comprising: determining security data in a document; encrypting part of the document containing the security data in a wireless remote terminal; wirelessly transmitting said partially encrypted document; receiving said partially encrypted document at a network server computer; further encrypting said received document at said server computer; and transmitting said further encrypted document to a terminal in said network.

As will be hereinafter be set forth in greater detail, this double, or two step, encryption permits the wireless palm type computer to minimize its encryption function so as to be within the limited data processing and memory capabilities of the palm device while still maximizing the encryption security of the document during most of the transmission and processing of the document throughout the Web. For example, for many Web business transactions, the credit card number of the user of the palm type computer is the critical data which is most important to encrypt. Accordingly, the limited processor and memory resources of the transmitting wireless palm type device are applied primarily to the encryption of the credit card number during the wireless transmission from the palm device to the Web server. Then, at the Web server, the received partially encrypted document may be further encrypted using the SSL protocols to encrypt the whole document for further conventional Web distribution and processing.

An important aspect of the present embodiment involves the recognition that since the wireless palm type device lacks the CPU and memory resources to encrypt the whole document using the conventional Web SSL protocols, the document may be partially encrypted at the wireless palm device using a less comprehensive and less powerful encryption protocol such as the above-mentioned 40-bit encryption or even a 64-bit system, e.g. The Blowfish Algorithm (described hereinafter). It is then necessary to decrypt this lower level encryption at the server to restore the text document at the server before the server may then re-encrypt the whole document using the conventional 128-bit Web encryption protocols, such as SSL.

In addition, if the critical or particularly sensitive data which is to be encrypted at the wireless palm device is a relatively small amount of data, such as a credit card number or like identifying number, then this limited amount of data may be encrypted at the palm device using the higher level encryption protocols without overly straining the CPU resources at the palm device. In such a case it will not be necessary to decrypt the partial encryption before fully encrypting the text document since the same high level encryption protocols will be used for this subsequent full encryption.

### Brief Description of the Drawings

The present invention will be better understood and its numerous objects and advantages will become more apparent to those skilled in the art by reference to the following drawings, in conjunction with the accompanying specification, in which:
Fig. 1 is a generalized view of a portion of the Web system including a wireless palm type display computer which may communicate directly with the Web in the practice of the present invention;
Fig. 2 is a block diagram of a data processing system including a central processing unit and network connections via a communications adapter which is capable of implementing the Web server, as well as implementing any Web display computer station;
Fig. 3 is a generalized block view of a conventional wireless palm type computer or personal digital display assistant set up to carry out the present invention;
Fig. 4 is an illustrative flowchart describing the setting up of the functions to partially encrypt documents from the palm type display computers and to wirelessly communicate partially encrypted documents to a Web server for further decryption/encryption; and
Fig. 5 is a flowchart of an illustrative run of a program set up according to Fig. 4.

### Detailed Description of the Preferred Embodiment

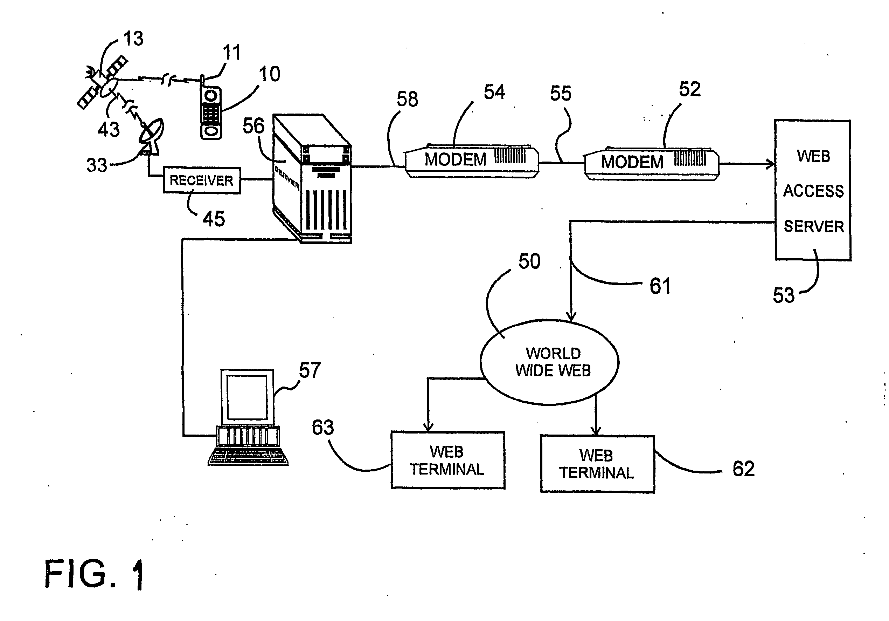

Referring to Fig. 1, there is provided a generalized system through which the individual wireless palm-type terminals 10 may be connected to their respective Web servers 56. The mobile terminal 10 transmits/receives 12 via antenna 10 to/from satellite 13 via path 43 to satellite dish 33 and then through wireless terminal receiver 45 connected to Web server 56. It should be noted that the term personal palm type device is used to generally cover all varieties of palm type devices. These include cellular phones and related wireless devices, smartphones and Internet screen phones. The encryption and decryption functions performed in palm computer device 10 and in the server 56 have been previously discussed in general and will be subsequently discussed in detail. Server 56 may have an associated I/O display or display computer 57 through which a user may interface with the server 56 for maintenance, upgrading, error correction, etc.

Server 56 is connected into the Web 50 in the standard manner. Reference may be made to Mastering the Internet, G. H. Cady et al., published by Sybex Inc., Alameda, CA, 1996, pp. 136-147, for typical connections between local display stations to the Web via network servers, any of which may be used to implement the system on which this invention is used. The system embodiment of Fig. 1 has a host-dial connection. Such host-dial connections have been in use for over 30 years through Web access servers 53 which are linked 61 to the Web 50. The Web server 53 is accessed through a normal dial-up telephone linkage 58 via modem 54, telephone line 55 and modem 52. In a transmission from palm type device 10, the documents are partially encrypted at the device 10 and wirelessly transmitted to server 56 where further decryption/encryption is carried out, as will be hereinafter described. The encrypted documents are then downloaded to Web access server 53 via the telephone line linkages from server 56. The documents are then distributed to Web 50 via linkage 61. The Web documents may then be accessed through the Web terminals 62 and 63, at which the encrypted documents may be decrypted as will be hereinafter described.

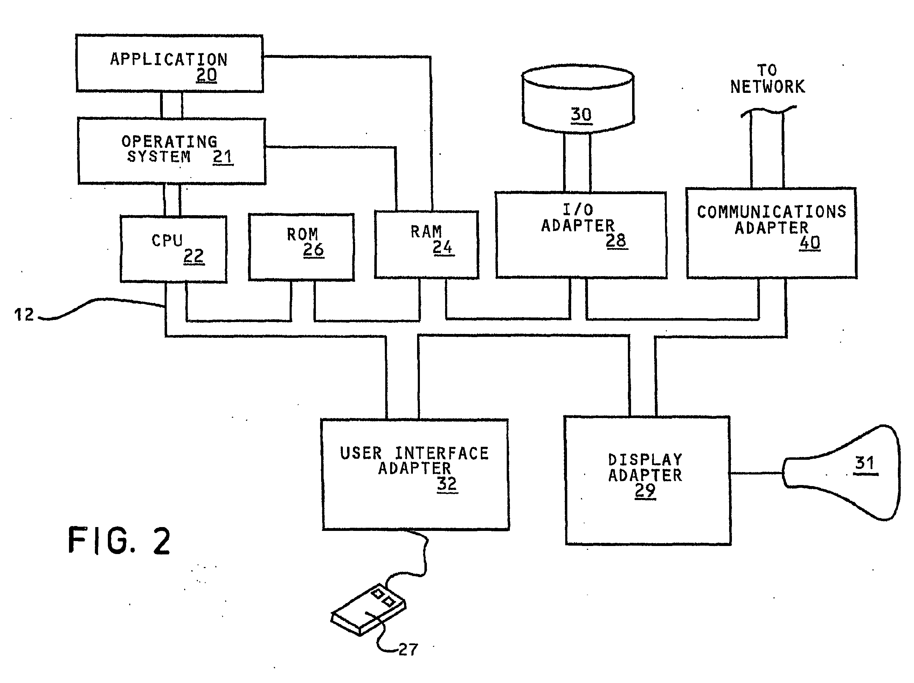

Referring now to Fig. 2, a typical data processing terminal is shown which may function as any of the Web terminals 62-63, servers 56 and 53, as well as I/O display terminal 57. A Central Processing Unit (CPU) 22, such as one of the PC microprocessors or workstations, e.g. RISC System/6000^{(™)} (RS/6000) series available from International Business Machines Corporation (IBM), is provided and interconnected to various other components by system bus 25. An operating system 21 runs on CPU 22, provides control and is used to coordinate the function of the various components of Fig. 2. Operating system 21 may be one of the commercially available operating systems such as the AIX 6000^{(™)} operating system available from IBM; Microsoft's Windows98^{(™)} or WindowsNT^{(™)}, as well as UNIX and AIX operating systems. Application programs 20, controlled by the system, are moved into and out of the main memory, Random Access Memory (RAM) 24. These programs include the programs and routines of the present invention for encryption and decryption at the server and Web terminal components as described herein. A Read Only Memory (ROM) 26 is connected to CPU 22 via bus 25 and includes the Basic Input/Output System (BIOS) that controls the basic computer functions. RAM 24, I/O adapter 28 and communications adapter 40 are also interconnected to system bus 25. I/O adapter 28 communicates with the disk storage device 30. Communications adapter 40 interconnects bus 25 with the appropriate outside network enabling the data processing system to communicate, as respectively described above, through the Web or Internet. I/O devices are also connected to system bus 25 via user interface adapter 32 and display adapter 29. Mouse 27 is interconnected to bus 25 through user interface adapter 32. Display adapter 36 supports monitor 38. The display adapter and monitor may be eliminated in the network servers without any display I/O functions.

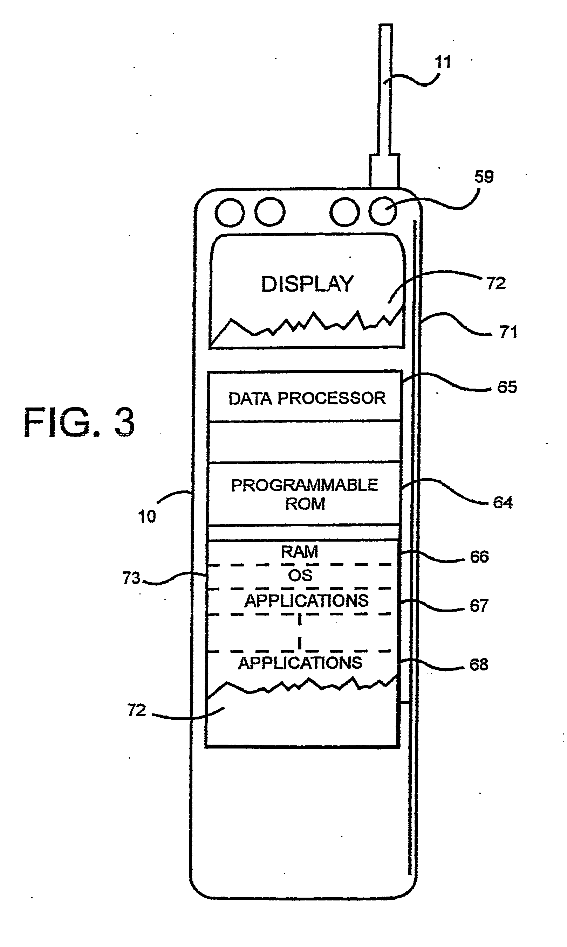

Referring now to Fig. 3, there is shown a very generalized diagram of the personal palm type device 10. However, before proceeding further with this description, we will, at this point, provide some background with respect to the PDAs or personal palm type devices used in the present invention. The most common PDAs included in the present generic definition are the: personal palm type devices including Microsoft's WinCE line; the PalmPilot line produced by 3Com Corp.; IBM's WorkPad; and Motorola's Two Way Pager. These devices are comprehensively described in the text, Palm III & PalmPilot, Jeff Carlson, Peachpit Press, 1998, and in the text, Palm Handheld, Johnson and Brioda, Osborne/McGraw-Hill, New York, 2000. They contain a data processor, operating system, about 2. to 4 MB of RAM and a permanent programmable memory, a programmable ROM which may be an EPROM or flash ROM, which are described in the Carlson text at page 38. Because these flash ROMs can now provide 4 MB of capacity, all of the application programs including the encryption routines of the present invention conventionally stored on the personal palm device's RAM are now also stored in this ROM. In addition, the device operating system and built-in applications are also conventionally stored in the ROM. Flash ROMs may be written into by a technique known as flashing. Additional software may be flashed into the ROM hardware. Thus, the personal palm type device 10 includes a data processor 65, a programmable ROM 64, which is preferably the previously described Flash ROM, a RAM 66 which is shown in an operational state loaded with the device's operating system 73 and its application programs 67, including the encryption program routines of the present invention. The personal palm device 10 also includes antenna 11, control buttons 59 and display screen 72.

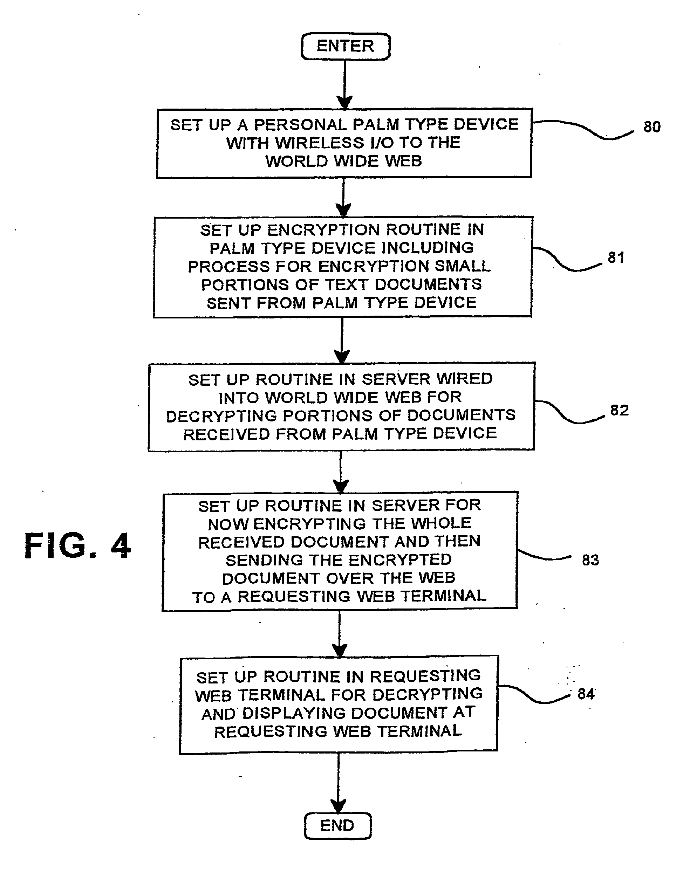

Now with reference to the programming shown in Fig. 4, the program of the present invention is set up. A personal palm type computer device is set up with a wireless I/O to the Web, step 80, e.g. wireless transmissions receiver 45 connected to server 56 (Fig. 2). An encryption routine is set up within the palm type device, step 81. As previously set forth, because of the limitations in processor power and memory in the palm device, the wireless palm type device uses a simpler encryption program, The Blowfish Algorithm, a 64 bit encryption system as compared to the more complex 128 bit SSL encryption system presently used for Web document encryption. The Blowfish Algorithm was developed in 1994 as a block cipher that encrypts/decrypts data in 8-byte blocks. The algorithm is described in the article Fast Software Encryption, R. Anderson, first published in Dr. Dobb's Journal, April 1994, and subsequently in the article, The Blowfish Algorithm--One Year Later, B. Schneier, also in Dr Dobb's Journal, September 1995. However, at the present time, 2001, Blowfish is an older and simpler encryption program than the currently used 128 bit encryption system. However, Blowfish is very suitable to the resource limitations of the palm type computers. In addition, there is set up in the present routine, the capability of encrypting only relatively small portions of the text documents being wirelessly transmitted, e.g. just the credit card numbers in the transmitted document. A complementary Blowfish decryption routine is set up in the server which receives the wireless transmission for further distribution in the Web for decrypting the encrypted portions of the wireless document from the palm device, step 82, Fig. 4. Thus, the received document is now completely in text form in the server. The server is set up with a standard SSL routine which now encrypts the whole document and sends the whole encrypted document according to SSL protocols to the receiving Web terminal, step 83. The receiving or requesting Web terminal is set up with an SSL routine for decrypting the document in order that it may be displayed at the terminal, step 84.

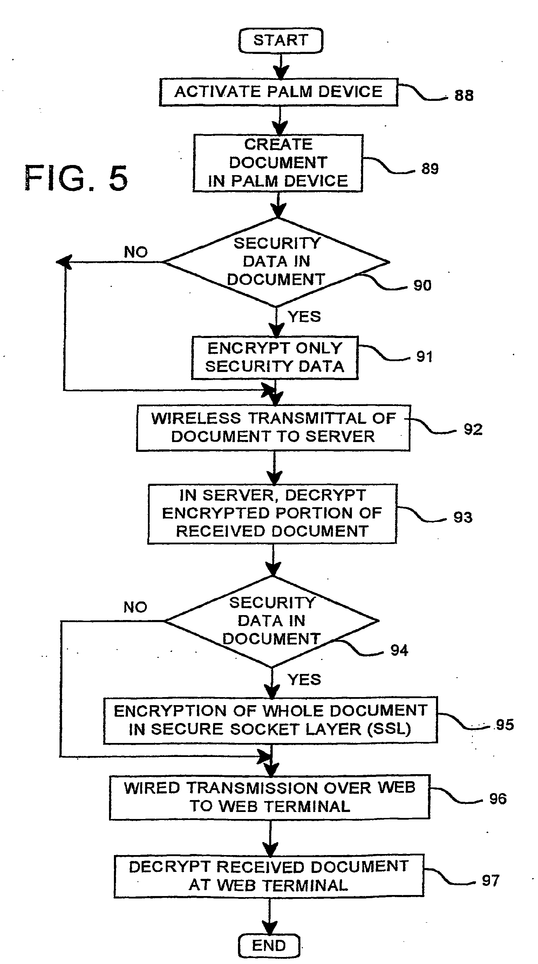

Now, with reference to the flowchart of Fig. 5, a simplified illustrative run of the process set up in Fig. 4 will be described. The wireless palm type device is activated, step 88. A document for transmission is created in the palm device, step 89. A determination is made, step 90, as to whether there is any security data in the created document which must be protected, e.g. a credit card number. If Yes, only the security data is encrypted, step 91, by Blowfish for example, and then step 92, the partially encrypted document is wirelessly transmitted to the server. If the determination in step 90 is No, there is no security data, then the unencrypted document is also wirelessly transmitted to the server, step 92. When the wireless document is received at the server, then any partial encryptions are decrypted using The Blowfish Alagorithm, step 93. At this point, a further determination is made as to whether there is any security data in the document, step 94. If Yes, then the whole document is encrypted in a SSL, step 95, and there is a wired transmission over the Web to the appropriate Web terminal, step 96. If the determination from step 94 is No secure data, then there is still a wired transmission over the Web to the appropriate Web terminal, step 96, without encryption. The received document, if encrypted, is then decrypted using SSL protocols.

It should be noted that the programs covered by the present invention may be stored outside of the present computer systems until they are required. The program instructions may be stored in another readable medium, e.g. in a disk drive associated with the desktop computer or in a removable memory such as an optical disk for use in a CD ROM computer input or in a floppy disk for use in a floppy disk drive computer input. Further, the program instructions may be stored in the memory of another computer prior to use in the system of the present invention and transmitted over a Local Area Network (LAN) or a Wide Area Network (WAN), such as the Internet, when required by the user of the present invention. One skilled in the art should appreciate that the processes controlling the present invention are capable of being distributed in computer readable media of a variety of forms.

Although certain preferred embodiments have been shown and described, it will be understood that many changes and modifications may be made therein without departing from the scope of the appended claims.

## Claims

1. A computer network system for use in a computer network comprising a plurality of computer controlled terminals (62), said system for the secure transmission of data to the network from wireless remote computer controlled display terminals comprising:
a wireless computer controlled display terminal including:
means for determining (90) security data in a document;
means for encrypting (91) part of the document containing the security data; and
means for wirelessly transmitting (92) said partially encrypted document; and
a server computer including:
means for receiving said partially encrypted document;
means for further encrypting (95) said received document; and
means for transmitting (96) said further encrypted document to a terminal in said network.

2. The computer network system of claim 1 wherein said wireless display terminal is a personal palm type terminal and said computer network is the World Wide Web.

3. The computer network system of claim 2 wherein said encrypted document includes a credit card number.

4. The computer network system of claim 3 wherein said server computer further includes:
means for decrypting said encrypted document prior to said further encrypting.

5. The computer network system of claim 4 wherein said means for further encrypting is adapted to encrypt said document in a Secure Socket Layer (SSL) and to further encrypt the whole received document.

6. A method for the secure transmission of data from wireless remote computer controlled display terminals to a computer network of a plurality of computer controlled terminals (62) comprising:
determining (90) security data in a document;
encrypting (91) part of the document containing the security data in a wireless remote terminal;
wirelessly transmitting (92) said partially encrypted document;
receiving said partially encrypted document at a network server computer;
further encrypting (95) said received document at said server computer; and
transmitting (96) said further encrypted document to a terminal in said network.

7. The method of claim 6 wherein said wireless display terminal is a personal palm type terminal and said computer network is the World Wide Web.

8. The method of claim 7 wherein said encrypted said document includes a credit card number.

9. The method of claim 8 further including the step of decrypting said encrypted document in said server prior to said further encrypting.

10. The method of claim 9 wherein said step of further encrypting encrypts said document in a Secure Socket Layer (SSL) and encrypts the whole received document.

11. A computer-readable storage medium storing a set of machine executable code, said set of machine executable code being executable by a computer to perform the steps of claims 6 to 10.

## Patentansprüche

1. Computer-Netzwerksystem zur Verwendung in einem Computernetzwerk, das eine Vielzahl von computergesteuerten Endgeräten (62) umfasst; wobei das System zur sicheren Übertragung von Daten von entfernten computergesteuerten Drahtlosübertragungs-Anzeigeendgeräten an das Netzwerk dient, wobei das System Folgendes umfasst:
ein computergesteuertes Drahtlosübertragungs-Anzeigeendgerät, das Folgendes enthält:
ein Mittel zum Ermitteln (90) von Sicherheitsdaten in einem Dokument;
ein Mittel zum Verschlüsseln (91) eines Teils des Dokuments, der die Sicherheitsdaten enthält; und
ein Mittel zum drahtlosen Übertragen (92) des teilweise verschlüsselten Dokuments; und
einen Server-Computer, der Folgendes enthält:
ein Mittel zum Empfangen des teilweise verschlüsselten Dokuments;
ein Mittel zum weiteren Verschlüsseln (95) des empfangenen Dokuments; und
ein Mittel zum Übertragen (96) des weiter verschlüsselten Dokuments zu einem Endgerät in dem Netzwerk.

2. Computer-Netzwerksystem nach Anspruch 1, wobei das Drahtlosübertragungs-Anzeigeendgerät ein Endgerät des Typs persönlicher Handcomputer (personal palm type terminal) ist und es sich bei dem Computernetzwerk um das World Wide Web (Internet) handelt.

3. Computer-Netzwerksystem nach Anspruch 2, wobei das verschlüsselte Dokument eine Kreditkartennummer enthält.

4. Computer-Netzwerksystem nach Anspruch 3, wobei der Server-Computer ferner enthält:
ein Mittel zum Entschlüsseln des verschlüsselten Dokuments vor dem weiteren Verschlüsseln.

5. Computer-Netzwerksystem nach Anspruch 4, wobei das Mittel zum weiteren Verschlüsseln in der Lage ist, das Dokument in einer sicheren Verbindungsendschicht (Secure Socket Layer, SSL) zu verschlüsseln und das gesamte empfangene Dokument weiter zu verschlüsseln.

6. Verfahren zur sicheren Übertragung von Daten von entfernten computergesteuerten Drahtlosübertragungs-Anzeigeendgeräten zu einem Computernetzwerk aus einer Vielzahl von computergesteuerten Anzeigeendgeräten (62), wobei das Verfahren die folgenden Schritte umfasst:
Ermitteln (90) von Sicherheitsdaten in einem Dokument; Verschlüsseln (91) eines Teils des Dokuments, der die Sicherheitsdaten enthält, in einem entfernten Drahtlosübertragungs-Endgerät;
drahtloses Übertragen (92) des teilweise verschlüsselten Dokuments;
Empfangen des teilweise verschlüsselten Dokuments in einem Computer des Netzwerkservers;
weiteres Verschlüsseln (95) des empfangenen Dokuments in dem Server-Computer; und
Übertragen (96) des weiter verschlüsselten Dokuments zu einem Endgerät in dem Netzwerk.

7. Verfahren nach Anspruch 6, wobei das Drahtlosübertragungs-Anzeigeendgerät ein Endgerät des Typs Handcomputer ist und es sich bei dem Computer-Netzwerk um das World Wide Web (Internet) handelt.

8. Verfahren nach Anspruch 7, wobei das verschlüsselte Dokument eine Kreditkartennummer enthält.

9. Verfahren nach Anspruch 8, das ferner den Schritt des Entschlüsselns des verschlüsselten Dokuments in dem Server vor dem weiteren Verschlüsseln enthält.

10. Verfahren nach Anspruch 9, wobei der Schritt des weiteren Verschlüsselns das Dokument in einer sicheren Verbindungsendschicht (Secure Socket Layer, SSL ) verschlüsselt und das gesamte empfangene Dokument verschlüsselt.

11. Computerlesbares Speichermedium, das einen Satz eines von Maschinen ausführbaren Codes speichert, wobei der Satz des von Maschinen ausführbaren Codes durch einen Computer ausgeführt werden kann, um die Schritte der Ansprüche 6 bis 10 auszuführen.

## Revendications

1. Système de réseau informatique à utiliser dans un réseau informatique comprenant une pluralité de terminaux commandés par un ordinateur (62), ledit système étant destiné à la transmission sécurisée de données sur le réseau à partir de terminaux d'affichage distants sans fil commandés par un ordinateur, comprenant :
un terminal d'affichage sans fil commandé par un ordinateur, comprenant :
un moyen destiné à déterminer (90) des données de sécurité dans un document, un moyen destiné à crypter (91) une partie du document contenant les données de sécurité, et
un moyen destiné à transmettre sans fil (92) ledit document partiellement crypté, et
un ordinateur serveur comprenant :
un moyen destiné à recevoir ledit document partiellement crypté,
un moyen destiné à crypter davantage (95) ledit document reçu, et
un moyen destiné à transmettre (96) ledit document davantage crypté à un terminal dans ledit réseau.

2. Système de réseau informatique selon la revendication 1, dans lequel ledit terminal d'affichage sans fil est un terminal de type ordinateur de poche personnel et ledit réseau informatique est le réseau World Wide Web.

3. Système de réseau informatique selon la revendication 2, dans lequel ledit document crypté comprend un numéro de carte de crédit.

4. Système de réseau informatique selon la revendication 3, dans lequel ledit ordinateur serveur comprend en outre :
un moyen destiné à décrypter ledit document crypté avant ledit cryptage supplémentaire.

5. Système de réseau informatique selon la revendication 4, dans lequel ledit moyen destiné à crypter davantage est conçu pour crypter ledit document dans une couche de point de connexion sécurisée (SSL) et pour crypter davantage l'ensemble du document reçu.

6. Procédé de transmission sécurisée de données de terminaux d'affichage distants sans fil commandés par un ordinateur à un réseau informatique constitué d'une pluralité de terminaux commandés par un ordinateur (62) comprenant :
la détermination (90) de données de sécurité dans un document,
le cryptage (91) d'une partie du document contenant les données de sécurité dans un terminal distant sans fil,
la transmission sans fil (92) dudit document partiellement crypté,
la réception dudit document partiellement crypté au niveau d'un ordinateur serveur de réseau,
le cryptage supplémentaire (95) dudit document reçu au niveau dudit ordinateur serveur, et
la transmission (96) dudit document davantage crypté à un terminal dans ledit réseau.

7. Procédé selon la revendication 6, dans lequel ledit terminal d'affichage sans fil est un terminal de type ordinateur de poche personnel et ledit réseau informatique est le réseau Word Wide Web.

8. Procédé selon la revendication 7, dans lequel ledit document crypté comprend un numéro de carte de crédit.

9. Procédé selon la revendication 8, comprenant en outre l'étape consistant à décrypter ledit document crypté dans ledit serveur avant ledit cryptage supplémentaire.

10. Procédé selon la revendication 9, dans lequel ladite étape de cryptage supplémentaire crypte ledit document dans une couche de point de connexion sécurisée (SSL) et crypte l'ensemble du document reçu.

11. Support de mémorisation lisible par un ordinateur mémorisant un ensemble de code exécutable par une machine, ledit ensemble de code exécutable par une machine étant exécutable par un ordinateur pour exécuter les étapes selon les revendications 6 à 10.
